# EUROPEAN PATENT SPECIFICATION

(11) **EP 3 002 170 B1**
(45) Date of publication and mention of the grant of the patent: **20.02.2019**
(21) Application number: 14187116.0
(22) Date of filing: 30.09.2014
(51) Int. Cl.: B60S 9/08, B60S 9/02

(54) **A swivel unit of a height-adjustable support for trailers or the like**
Drehbare Einheit eines höhenverstellbaren Trägers für Anhänger oder dergleichen
Unité de pivotement d'un support réglable en hauteur pour remorques ou analogue

(43) Date of publication of application: 06.04.2016
(73) Proprietor: MAKERSAN MAKINA OTOMOTIV SANAYI TICARET ANONIM SIRKETI, Gebze / Kocaeli (TR)
(72) Inventor: Erkocak, Ertugrul, 41490 Kocaeli (TR)
(74) Representative: Sevinç, Erkan

(56) References cited:
- EP-A2- 2 141 053
- DE-A1- 4 003 414
- DE-U1-202007 007 990
- US-A1- 2011 272 931

## Description

### Technical Field of the Invention

The present invention relates to a swivel unit of a height-adjustable support for vehicles such as trailers, semi-trailers or the like, more particularly, to a swivel unit having arc-shaped reinforcement members adapted to come to engage with compensating elements for increasing stiffness of the swivel unit.

### Background of the Invention

A height-adjustable support for vehicles such as trailer, semi-trailer is well-known in the state of the art and there exist a series of developments made in order to improve weight resistance, balance and constructive properties of said mechanisms and patent applications relevant to said developments.

Supports of this type, usually arranged in pairs, are used in the front region of the trailer, semitrailer or the like. It is known that the height-adjustable support, also called as a support leg, landing gear or landing leg, can move around a rotary support in order to balance structures such as trailer, semi-trailer or the like so as to allow them to stand stable and proper when they are parked. In the event of longer parking times, leaks in the brake and air-spring systems may cause the rear part of the semi-trailer to lower and irregularities in the position of the trailer. In order to be able to compensate this positional offset, height-adjustable support have been developed which are arranged in such a way that they can be swiveled or rolled. Among others, DE 40 03 414**,** disclosing a roller element which is pivotably mounted at the lower end of a height-adjustable support and which comprises a part-cylindrical member and end wall members for balancing positional offset.

EP 0 972 687 B1 which is another relevant document according to the present invention describes a similar support foot having a swivel unit capable of rotating around a shaft. Said document discloses that the cylindrical compensating elements which are located on the base of the support foot and enable rotating are curved inward with the bending/inclining method and thus a skirt structure is created so as to provide support. It is aimed to provide force distribution against the received loads by creating a skirt which is bended inward in the lateral walls/cheeks provided in the support unit of the trailer support mechanism according to the prior art. One of the problems experienced in said structure is that the sheet thickness of the created skirt structure and other sections of the lateral walls remains the same; and the wall thickness around the shaft on which the actual load has an effect and in the sections where said load contacts with the ground as well as the wall thickness of the other sections remains the same. Since extra strength increase is not provided in the sections which the load of the trailer and a similar structure affects the most, said sections are subject to much more crushing stress when compared to other sections.

The height-adjustable supports are mostly used under harsh environmental conditions and attached to a swivel unit is generally by welding. Therefore, it is necessary to equally distribute the load components having an effect at the lifting and conveying positions in the support legs of similar trailers in order to prevent the welded section from being subject to more loads.

The height-adjustable support also cause a weight increase in the trailer to which it is connected. Therefore, there is a need particularly for a lighter and more solid support leg unit where the affecting loads are equally distributed as well as the need for reducing the weight of said height-adjustable supports. US2011/0272931 (A1) relates to a supporting foot for a supporting device for vehicles such as semi-trailers, comprising a foot element with a resting portion for resting on an underlying surface, and a compensating element for receiving a supporting element and for compensating for a positional offset of same by the compensating element being movable between a first and a second position with respect to the foot element.

### Objects of the Invention

The primary object of the present invention is to overcome the aforementioned disadvantages of the known prior art by providing at least one reinforcement-member that can be attached to compensating elements of the swivel unit.

Another object of the present invention is to provide an arc-shaped reinforcement member so that at least one of the compensating elements can be formed as a lighter member without compromising the strength and rigidity.

Another object of the present invention is to provide a support unit for trailer or the like wherein the production process thereof is facilitated by eliminating the extra processes such as bending and pressing at the same time by increasing the stiffness.

Another object of the present invention is to increase strength and rigidity of support unit, especially, where load of a trailer or the like affects the most.

Yet another object of the present invention is to provide a reinforcement member for compensating elements for swivel unit that is durable in construction, inexpensive of manufacture and simple and effective in use.

### Summary of the Invention

The present invention proposes a swivel unit for a height-adjustable support of vehicles such as trailers, semi-trailers or the like, comprises a base unit having a base plate for resting on an underlying surface, at least two compensating elements which are rollable on the base plate, having coaxial opening in which a support tube, made of a sheet metal and rolled up to be in form of cylindrical, is rotatably engaged for a pivotable support of the swivel unit. Said swivel unit comprises at least one arc-shaped reinforcement member for attachment to said compensating element between a longitudinal axis of the support tube and the base plate, such that stiffness of the swivel unit is increased.

The swivel unit comprises at least one protrusion shaped as a circle, a triangle, a quadrangle, a pentagon or another polygon for engagement of said reinforcement member being formed from same sheet metal when producing the compensating element. The compensating element is provided with at least one stiffener rib formed on an outer periphery of the compensating element. The base unit comprises at least two spaced apart guiding portion which is in engagement with the compensating element, has a V-shaped guiding portion opening for guiding a connecting rod such that the compensating element can be rolled on a rolling area of the base unit.

### Brief Description of the Figures

Accompanying drawings are given solely for the purpose of exemplifying a swivel unit whose advantages over prior art were outlined above and will be explained in detail hereinafter:
Fig. 1 demonstrates an exploded view of the swivel unit for a height-adjustable support or the like according to the present invention.
Fig. 2 demonstrates a perspective view of the swivel unit for a height-adjustable support or the like according to the present invention.
Fig. 3 demonstrates a side view of the compensating element where the reinforcement member is attached according to the present invention.

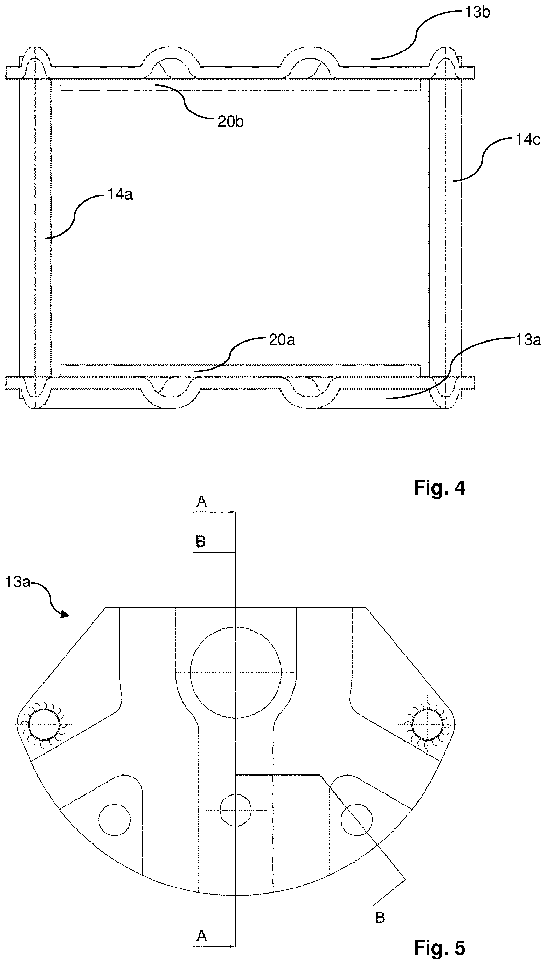

Fig. 4 demonstrates a top view of the compensating elements and connecting rods according to the present invention.
Fig. 5 demonstrates a side view of the compensating elements and connecting rods according to the present invention.

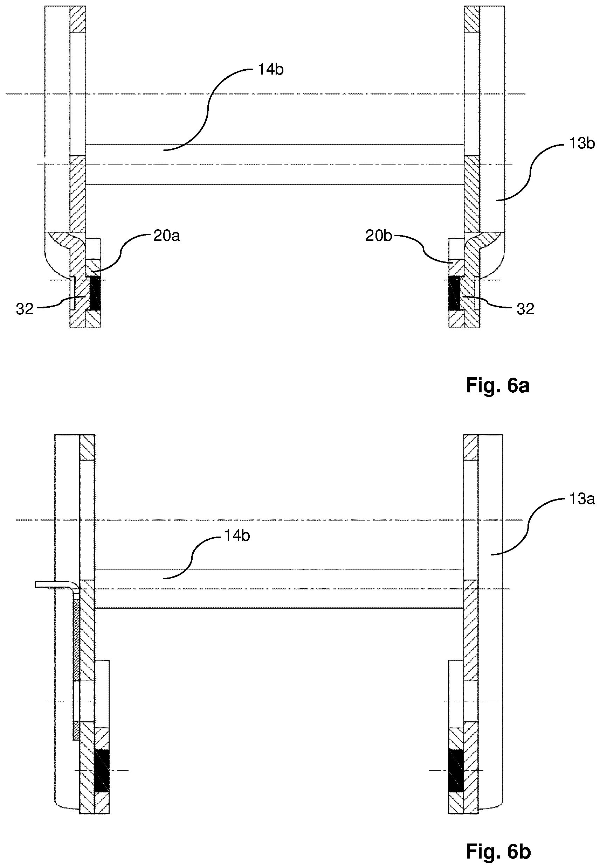

Fig. 6a demonstrates a cross-section A-A as indicated in Fig. 5 according to the present invention.
Fig. 6b demonstrates a cross-section B-B as indicated in Fig. 5 according to the present invention.
Fig. 7 demonstrates a perspective view of the compensating elements and connecting rods according to the present invention.
Fig. 8a demonstrates an ANSYS analysis illustrating strength on the compensating elements due to a linear pressure distribution exerted on the compensating elements; according to the prior art.
Fig. 8b demonstrates an ANSYS analysis illustrating strength on the compensating elements due to a linear pressure distribution exerted on the compensating elements; according to the present invention.
Fig. 9a demonstrates an ANSYS analysis illustrating stress on the compensating elements due to a linear pressure distribution exerted on the compensating elements; according to the prior art.
Fig. 9b demonstrates an ANSYS analysis illustrating stress on the compensating elements due to a linear pressure distribution exerted on the compensating elements; according to the present invention.

### Detailed Description of the Invention

10. Swivel unit
12. Support tube
13a. Compensating element
13b. Compensating element
14a. Connecting rod
14b. Connecting rod
14c. Connecting rod
15. Base unit
16. Spring
19. Opening
20a. Reinforcement member
20b. Reinforcement member
21. Guiding portion opening
23. Reinforcement member hole
27. Stiffener rib
28. Guiding portion
29. Base plate
30. Base support plate
31a. Rod hole
31a. Rod hole
31a. Rod hole
32. Protrusion
33. Inner surface
34. Spring member

Referring to the figures briefly described above, a swivel unit (10) of a height-adjustable support is situated at lower end of an extendible inner tube, which can be swiveled and rolled for compensating offset of position of a vehicle such as trailer, semi-trailer or the like, comprises a base unit (15) for resting on a ground, two guiding portions (28) which are situated reciprocally in said base unit (15) and extend at least substantially vertical, two compensating elements (13a, 13b) to be situated in a guiding portion opening (21) disposed in said guiding portion (28), and at least one connecting rod (14a, 14b, 14c) for connecting said compensating elements. Said height-adjustable support is also called as a support leg, landing gear or landing leg.

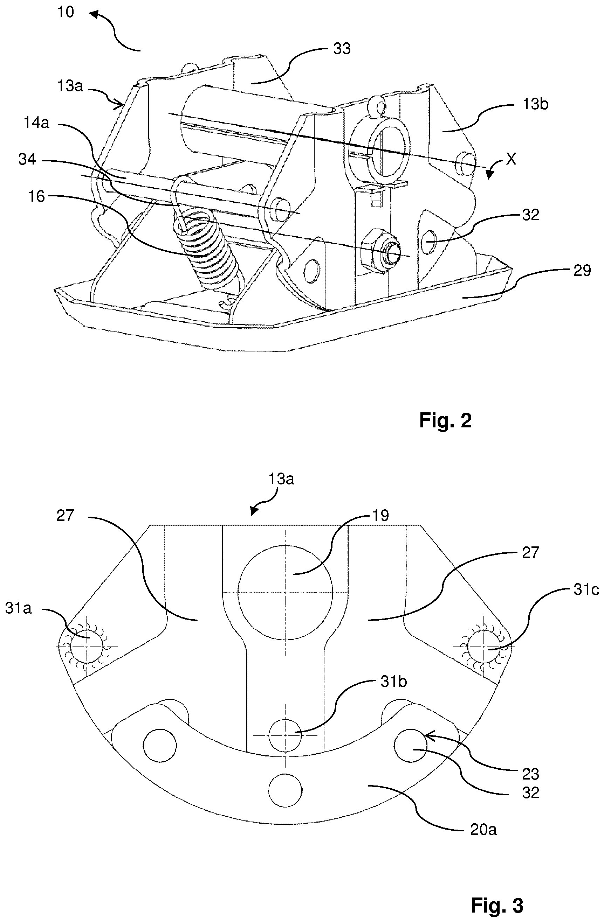

Figure 2 illustrates a perspective view of the swivel unit (10) used in the height-adjustable support so as to allow the structures such as trailer, semi-trailer or the like to be stable when they are parked separate from the truck-trailer. Said compensating elements (13a, 13b) are formed as a wheel and act in a thrust-compensating manner on the swivel unit (10) especially in the event of longer parking times.

A support tube (12) used for a pivotable support of the swivel unit (10) passes through coaxial openings (19) formed on the compensating elements (13a, 13b) so as to provide rotary motion in order to eliminate the positional offset and height differences on the surface of the section where said height-adjustable support will be situated. Said support tube (12) is preferably made of sheet metal and given a cylindrical form by being rotated after locking pin holes are created thereon at the reciprocal ends. The compensating elements (13a, 13b) situated in the lower section of a telescopic inner tube are connected with a support tube. Said compensating elements (13a, 13b) have coaxial holes, in which the support tube (12) is rotatably engaged.

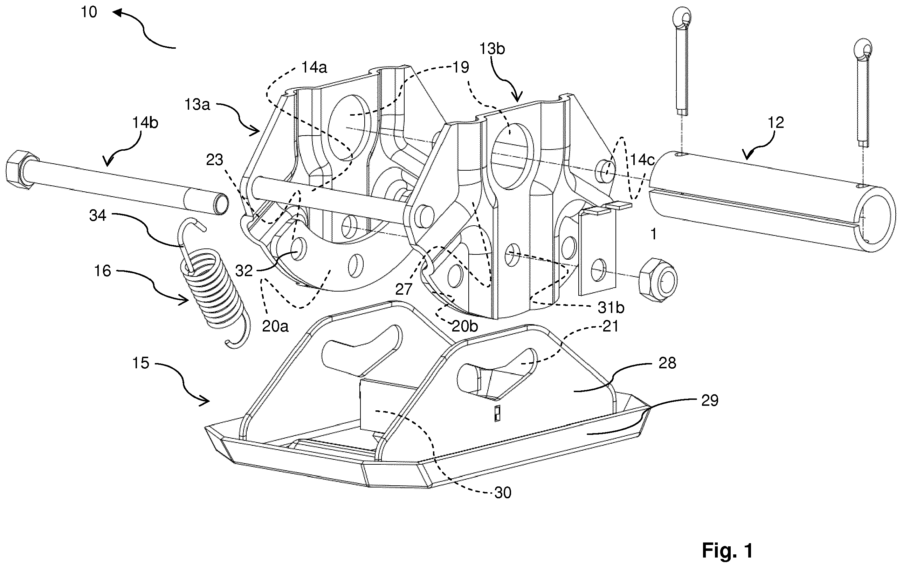

Referring to Figure 1, said compensating elements (13a, 13b) are preferably made of sheet metal as two separate pieces and formed after pressing and drilling processes. Using two compensating elements instead of a longitudinal profile in form of U thereof provides a better balancing. The partial rolling motion of the compensating elements (13a, 13b) is performed on the longitudinal axis of the inner surface of the base unit (15) having a base plate (29) on which said compensating elements are able to be roll.

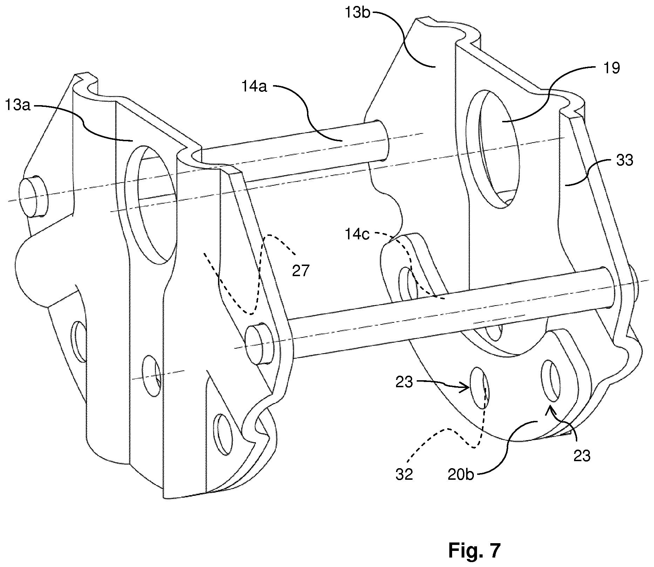

At least one protrusion (32) is formed in the compensating elements (13a, 13b) which are created on the sheet metal with pressing process. Said at least one protrusion (32) is shaped as a circle, a triangle, a quadrangle, a pentagon or another polygon. The reinforcement member (20a, 20b) created in a form of arc-shape having holes shaped and sized according to said protrusions (32) are connected to the inner surfaces (33) of the compensating elements (13a, 13b) as seen in Figure 7. After attachment of reinforcement member (20a, 20b), said reinforcement member touches rolling area where said swivel base (10) touches during the partial rotary motion when the rotary axis is changed. The compensating element (13a, 13b) comprises at least one reinforcement member hole (23) sized and shaped according to the protrusion (32). For a better connection, the reinforcement members (20a, 20b) are welded from the connection points, especially on the protrusion (32).

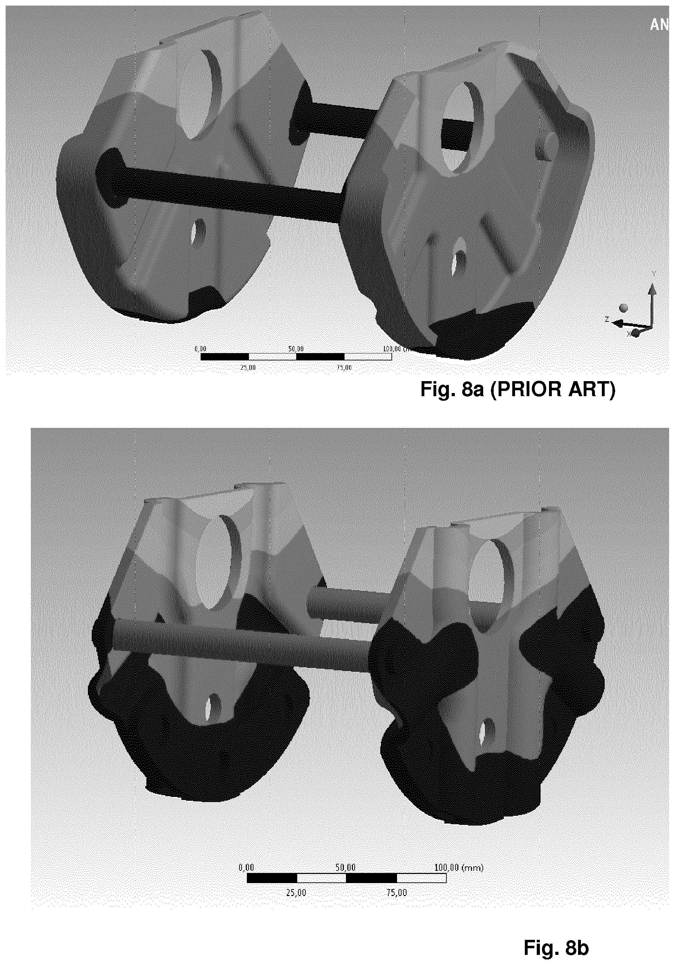

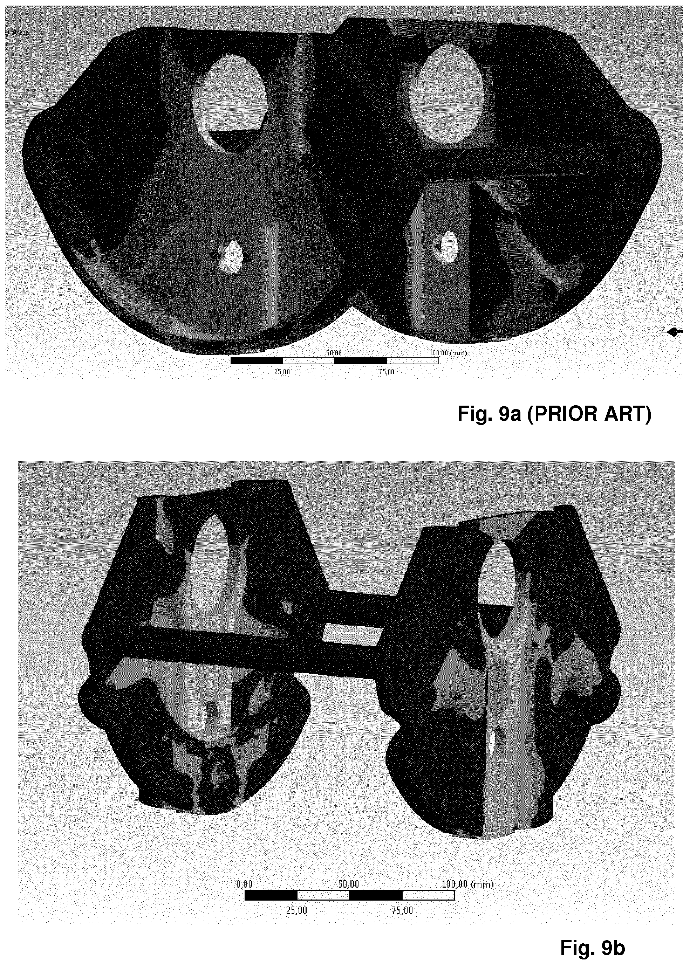

The compensating elements (13a, 13b) are subject to bending and buckling stresses which might cause damage to or failure of the height-adjustable support. Finite element analysis software such as ANSYS is used to determine the stresses, strains, forces, friction, and moments on the selected swivel unit of height-adjustable support. Fig. 8a and 9a demonstrates an ANSYS model illustrating deformation and stress analysis on the compensating elements due to a linear pressure distribution exerted on the compensating elements which have an inclined skirt; according to the prior art. On the other hand, figures 8b and 9b show the results of the same analysis for the compensating elements which have reinforcement members (20a, 20b) according to the present invention. It can be seen in Figure 8b that the reinforcement members (20a, 20b) increase the strength in the sections which the actual load affects especially lower part of the compensating elements (13a, 13b). Similarly, it is seen in Figure 9b that the reinforcement members (20a, 20b) increase the strength and stiffness. Thus, the strength of the swivel unit (10) is enhanced by mounting said reinforcement members (20a, 20b).

Fig. 9a demonstrates an ANSYS model illustrating stress-analysis on the compensating elements due to a linear pressure distribution exerted on the compensating elements; according to the prior art. It is observed in the analysis test shown in the Figure 9a according to the prior art that the deformation and displacement increases in the section where the compensating elements contact with the base unit and in the section just above the base unit especially on the rolling area. Figure 8a and 9a shows that the skirt structure created by bending process partially increases the strength of the swivel unit but it remains limited. Accordingly, the present invention not only eliminates the bending process for creating skirt structure of the compensating elements but also increases strength and crushing stress of the swivel unit (10).

Stiffener ribs (27) formed swollen on an outer periphery of the compensating element are created in order to distribute the force applied thereof more effectively when a trailer or the like vehicles are parked separate from the truck-trailer. Referring to Figures 8b and 9b, the stiffener rib structures (27) have a reverse Y form in the outer surface periphery of the compensating elements (13a, 13b) causes more stiffener structure.

Referring to Figure 2, said compensating elements (13a, 13b) are connected by, preferably three, connecting rods (14a, 14b, 14c). A guiding portion opening (21) in V form having rounded edges is provided inside the guiding portion (28). Said connecting rod (14b) is similarly fitted into the opposite slot of the compensating element (13b) by passing through the rod hole created on the compensating element (13a) and through said guiding portion opening (21) in V form. The middle section of the guiding portion opening (21) has an inclined structure so as to be closer to the base unit (15).
Figure 2 illustrates the perspective view of the swivel unit (10) suitable for being used in the trailers or similar structures provided according to the present invention. In the preferred embodiment of the invention, the compensating elements (13a, 13b) situated reciprocally are interconnected by means of three connecting rods (14a, 14b, 14c). As can be seen in Figure 2, the connecting rods (14a, 14b, 14c) pass through the rod holes (31a, 31b, 31c) disposed on the compensating elements (13a, 13b). At least one connecting rod (14a) is attached to the base unit (15) by means of a spring (16); and a spring member (34) is provided to enable the spring (16) to be connected to the base unit and the connecting rod (14a).
The reinforcement members (20a, 20b) according to the present development are preferably made of one-piece and can be obtained with any suitable material, preferably metal. For instance, said reinforcement member may be cast iron. Further, it is possible to produce thereof from a polymer material.

## Claims

1. A swivel unit (10) for a height-adjustable support of vehicles such as trailers, semi-trailers or the like, comprising:
a base unit (15) having a base plate (29) for resting on an underlying surface,
at least two compensating elements (13a, 13b) which are rollable on the base plate (29), having coaxial openings (19) in which a support tube (12) is rotatably engaged for a pivotable support of the swivel unit (10) **characterized in that;** said swivel unit (10) further comprises:
at least two arc-shaped reinforcement members (20a, 20b);
each of at least the two arc-shaped reinforcement members (20a, 20b) is attached to an inner surface (33) of one of said at least two compensating elements (13a, 13b) between a longitudinal axis of the support tube and the base plate (29), such that stiffness of the swivel unit(10) is increased, and is at least partially in touch with the base unit (15); and
each of said two compensating elements (13a, 13b) has at least one protrusion (32) being formed from same sheet metal for engagement with a shaped and sized hole in one of said at least two arc-shaped reinforcement members (20a, 20b).

2. A swivel unit (10) as set forth in Claim 1 wherein said at least one protrusion (32) is shaped as a circle, a triangle, a quadrangle, a pentagon or another polygon.

3. A swivel unit (10) as set forth in Claim 1 and 2 wherein the reinforcement member (20a, 20b) comprises at least one reinforcement member hole (23) sized and shaped according to the protrusion (32).

4. A swivel unit (10) as set forth in Claim 1 wherein the compensating element (13a, 13b) is provided with at least one stiffener rib (27) formed on an outer periphery of the compensating element (13a, 13b).

5. A swivel unit (10) as set forth in Claim 1 wherein said swivel unit (10) comprises at least one connecting rod (14a, 14b, 14c) for connecting said compensating elements (13a, 13b).

6. A swivel unit (10) as set forth in Claim 2 wherein the reinforcement member (20a, 20b) is welded to the compensating element (13a, 13b).

7. A swivel unit (10) as set forth in Claim 1 wherein the support tube (12) is made of a sheet metal and rolled up to be in form of cylindrical.

8. A swivel unit (10) as set forth in Claim 1 wherein the base unit (15) comprises at least two spaced apart guiding portion (28) which is in engagement with the each of compensating elements (13a, 13b).

9. A swivel unit (10) as set forth in Claim 8 wherein the guiding portion (28) has a guiding portion opening (21) for guiding a connecting rod (14b) such that the compensating element (13a, 13b) can be rolled on a rolling area of the base unit.

10. A swivel unit (10) as set forth in Claim 9 wherein the guiding portion (28) formed as a V-shaped.

## Patentansprüche

1. Drehlagereinheit (10), für eine höheneinstellbare Lagerung von Fahrzeugen, wie z.B. Anhängern, Aufliegern oder dergleichen, mit:
einer Basiseinheit (15), die eine Basisplatte (29) für das Aufliegen auf einer darunter liegenden Fläche hat,
zumindest zwei Ausgleichselemente (13a, 13b), die auf der Basisplatte (29) abrollbar sind und die koaxiale Öffnungen (19) haben, in welchen ein Lagerrohr (12) drehbar in Eingriff steht, für eine schwenkbare Lagerung der Drehlagereinheit (10), **dadurch gekennzeichnet, dass** die Drehlagereinheit (10) weiterhin aufweist:
zumindest zwei bogenförmige Verstärkungselemente (20a, 20b),
wobei jedes der zumindest zwei bogenförmigen Verstärkungselemente (20a, 20b) an einer Innenfläche (33) eines der zumindest zwei Ausgleichselemente (13a, 13b) zwischen einer Längsachse des Lagerrohres und der Basisplatte (29) angebracht ist, sodass die Steifigkeit der Drehlagereinheit (10) vergrößert wird, und zumindest teilweise mit der Basiseinheit (15) in Kontakt steht, und
jedes der beiden Ausgleichselemente (13a, 13b) zumindest einen Vorsprung (32) hat, der für den Eingriff mit einem entsprechend geformten und bemessenen Loch in einem der zumindest zwei bogenförmigen Verstärkungselemente (20a, 20b) aus demselben Blech hergestellt ist.

2. Drehlagereinheit (10) nach Anspruch 1, wobei der zumindest eine Vorsprung (32) als ein Kreis, ein Dreieck, ein Rechteck, ein Fünfeck oder ein anderes Polygon geformt ist.

3. Drehlagereinheit (10) nach Anspruch 1 oder 2, wobei das Verstärkungselement (20a, 20b) zumindest eine Verstärkungselementbohrung (23) aufweist, die passend zu dem Vorsprung (32) bemessen und geformt ist.

4. Drehlagereinheit (10) nach Anspruch 1, wobei das Ausgleichselement (13a, 13b) mit zumindest einer Verstärkungsrippe (27) versehen ist, die an einem äußeren Umfang des Ausgleichselementes (13a, 13b) ausgebildet ist.

5. Drehlagereinheit (10) nach Anspruch 1, wobei die Drehlagereinheit (10) zumindest eine Verbindungsstange (14a, 14b, 14c) für die Verbindung der Ausgleichselemente (13a, 13b) aufweist.

6. Drehlagereinheit (10) nach Anspruch 2, wobei das Verstärkungselement (20a, 20b) an das Ausgleichselement (13a, 13b) angeschweißt ist.

7. Drehlagereinheit (10) nach Anspruch 1, wobei das Lagerrohr (12) aus Blech hergestellt und gewalzt ist, sodass es die Form eines Zylinders hat.

8. Drehlagereinheit (10) nach Anspruch 1, wobei die Basiseinheit (15) zumindest zwei voneinander beabstandete Führungsabschnitte (28) hat, die in Eingriff mit jedem der Ausgleichselemente (13a, 13b) stehen.

9. Drehlagereinheit (10) nach Anspruch 8, wobei der Führungsabschnitt (28) eine Führungsabschnittsöffnung (21) hat, um eine Verbindungsstange (14b) so zu führen, dass das Ausgleichselement (13a, 13b) auf einem Rollbereich der Basiseinheit abgerollt werden kann.

10. Drehlagereinheit (10) nach Anspruch 9, wobei der Führungsabschnitt (28) V-förmig geformt ist.

## Revendications

1. Unité de pivotement (10) pour un support, réglable en hauteur, de véhicules tels que des remorques, des semi-remorques ou analogues, comprenant :
une unité de base (15) ayant une plaque de base (29) pour reposer sur une surface sous-jacente,
au moins deux éléments de compensation (13a, 13b) qui sont aptes à rouler sur la plaque de base (29), ayant des ouvertures coaxiales (19) dans lesquelles un tube de support (12) est engagé de manière rotative pour un support pivotant de l'unité de pivotement (10) ; **caractérisée par le fait que** ladite unité de pivotement (10) comprend en outre :
au moins deux éléments de renfort en forme d'arc (20a, 20b) ;
chacun des au moins deux éléments de renfort en forme d'arc (20a, 20b) est attaché à une surface interne (33) de l'un desdits au moins deux éléments de compensation (13a, 13b) entre un axe longitudinal du tube de support et la plaque de base (29), de telle sorte qu'une rigidité de l'unité de pivotement (10) est accrue, et est au moins partiellement en contact avec l'unité de base (15) ; et
chacun desdits au moins deux éléments de compensation (13a, 13b) a au moins une saillie (32) formée à partir d'une même tôle pour un engagement avec un trou conformé et dimensionné dans l'un desdits au moins deux éléments de renfort en forme d'arc (20a, 20b).

2. Unité de pivotement (10) selon la revendication 1, dans laquelle ladite au moins une saillie (32) est en forme de cercle, de triangle, de quadrilatère, de pentagone ou d'un autre polygone.

3. Unité de pivotement (10) selon les revendications 1 et 2, dans laquelle l'élément de renfort (20a, 20b) comprend au moins un trou d'élément de renfort (23) dimensionné et conformé selon la saillie (32).

4. Unité de pivotement (10) selon la revendication 1, dans laquelle l'élément de compensation (13a, 13b) comporte au moins une nervure de rigidification (27) formée sur une périphérie externe de l'élément de compensation (13a, 13b).

5. Unité de pivotement (10) selon la revendication 1, dans laquelle ladite unité de pivotement (10) comprend au moins une tige de liaison (14a, 14b, 14c) pour relier lesdits éléments de compensation (13a, 13b).

6. Unité de pivotement (10) selon la revendication 2, dans laquelle l'élément de renfort (20a, 20b) est soudé à l'élément de compensation (13a, 13b).

7. Unité de pivotement (10) selon la revendication 1, dans laquelle le tube de support (12) est fait d'une tôle et enroulé pour être de forme cylindrique.

8. Unité de pivotement (10) selon la revendication 1, dans laquelle l'unité de base (15) comprend au moins deux parties de guidage espacées (28) qui sont en engagement avec chacun des éléments de compensation (13a, 13b).

9. Unité de pivotement (10) selon la revendication 8, dans laquelle la partie de guidage (28) a une ouverture de partie de guidage (21) pour guider une tige de liaison (14b) de telle sorte que l'élément de compensation (13a, 13b) peut être amené à rouler sur une zone de roulement de l'unité de base.

10. Unité de pivotement (10) selon la revendication 9, dans laquelle la partie de guidage (28) est en forme de V.
